# EUROPÄISCHE PATENTSCHRIFT

(11) **EP 2 193 277 B1**
(45) Veröffentlichungstag und Bekanntmachung des Hinweises auf die Patenterteilung: **07.12.2011**
(21) Anmeldenummer: 08801533.4
(22) Anmeldetag: 07.08.2008
(51) Int. Cl.: F16B 21/08

(54) **VORRICHTUNG ZUM BEFESTIGEN EINES ANBAUTEILES AN EINEM TRÄGERTEIL**
DEVICE FOR SECURING AN ADD-ON TO A SUPPORT
DISPOSITIF DE FIXATION D'UNE PIÈCE RAPPORTÉE SUR UN ÉLÉMENT SUPPORT

(30) Priorität: 06.09.2007 DE 102007042484
(43) Veröffentlichungstag der Anmeldung: 09.06.2010
(73) Patentinhaber: A. RAYMOND ET CIE, 38000 Grenoble (FR)
(72) Erfinder: SPITZ, Uwe, 79618 Rheinfelden (DE)
(74) Vertreter: Rüttgers, Joachim
(86) Internationale Anmeldenummer: PCT/EP2008/006493
(87) Internationale Veröffentlichungsnummer: WO 2009/033531

(56) Entgegenhaltungen:
- EP-A- 0 476 284
- DE-A1- 10 208 505
- DE-A1- 19 607 786
- US-A1- 2004 265 094
- US-B1- 6 474 921

## Beschreibung

Die Erfindung betrifft eine Vorrichtung zum Befestigen eines Anbauteiles an einem Trägerteil gemäß dem Oberbegriff des Patentanspruches 1.

Eine derartige Vorrichtung ist aus US 2004/0265094 A1 bekannt. Die vorbekannte Vorrichtung zum Befestigen eines Anbauteiles an einem Trägerteil weist ein zur Auflage an dem Anbauteil oder an dem Trägerteil bestimmtes Kopfteil, das über seitliche überstehende Auflageabschnitte verfügt, und ein zum Einfügen in eine in dem Trägerteil ausgebildete Einfügeausnehmung bestimmtes Fußteil auf. Das Fußteil ist mit einer Rückwand, die bei in die Einfügeausnehmung eingefügter Anordnung des Fußteiles dem Rand der Einfügeausnehmung gegenüberliegend angeordnet ist, und mit einer über einen Umbiegeabschnitt mit der Rückwand verbundenen, gegenüber der Rückwand federnden Vorderwandanordnung ausgebildet, die sich von der Rückwand wegweisend in Richtung des Kopfteiles erstreckt und mit ihrem dem Kopfteil zugewandten freien Ende in einer in die Einfügeausnehmung eingefügten Anordnung des Fußteiles einen dem Kopfteil abgewandten, um die Einfügeausnehmung liegenden Randbereich des Trägerteiles hintergreift. Das Kopfteil weist in Verlängerung der Vorderwandanordnung einen Werkzeugkanal auf, wobei an der Vorderwandanordnung eine Manipulationsstruktur ausgebildet ist, die mit einem durch den Werkzeugkanal durchgeführten Werkzeug zum Bewegen der Vorderwandanordnung in Richtung der Rückwand für ein Lösen des Hintergriffes der Vorderwandanordnung mit dem an die Einfügeausnehmung angrenzenden Randbereich des Trägerteiles in Eingriff kommt.

Eine weitere Vorrichtung zum Befestigen eines Anbauteiles an einem Trägerteil ist aus DE 102 08 505 A1 bekannt. Diese Vorrichtung verfügt über ein Kopfteil, das zur Auflage an dem Trägerteil bestimmt ist und über seitliche überstehende Auflageabschnitte verfügt, die bei bestimmungsgemäßer Anordnung an dem Trägerteil aufliegen. Weiterhin ist ein Fußteil vorhanden, das zum Einfügen in eine in dem Trägerteil ausgebildete Einfügeausnehmung bestimmt ist und eine Rückwand aufweist, die bei in die Einfügeausnehmung eingefügter Anordnung des Fußteiles dem Rand der Einfügeausnehmung gegenüberliegend angeordnet ist. Das Fußteil ist weiterhin mit einer über einen Umbiegeabschnitt mit der Rückwand verbundenen Vorderwand ausgebildet, die sich abgewinkelt von der Rückwand wegweisend in Richtung des Kopfteiles erstreckt und mit ihrem dem Kopfteil zugewandten freien Ende in in die Einfügeausnehmung eingefügter Anordnung des Fußteiles einen dem Kopfteil abgewandten, um die Einfügeausnehmung liegenden Randbereich des Trägerteiles hintergreift.

Der Erfindung liegt die Aufgabe zugrunde, eine Vorrichtung zum Befestigen eines Anbauteiles an einem Trägerteil der eingangs genannten Art anzugeben, die sich bei einem sicheren Halt in einer in einem Trägerteil eingebrachten Einfügeausnehmung wieder verhältnismäßig einfach entfernen lässt.

Diese Aufgabe wird bei einer Vorrichtung zum Befestigen eines Anbauteiles an einem Trägerteil der eingangs genannten Art erfindungsgemäß mit den kennzeichnenden Merkmalen des Patentanspruches 1 gelöst.

Dadurch, dass die erfindungsgemäße Vorrichtung einen Werkzeugkanal aufweist, der beispielsweise mit einem Werkzeug einen Zugriff auf die Vorderwand zulässt, und dass an der Vorderwand eine Manipulationsstruktur ausgebildet ist, die im Zusammenwirken mit einem baubedingt mit Sicherheit zwischen die Vorderwand und den Rand der Einfügeausnehmung einführbaren Werkzeug ein Bewegen der Vorderwand in Richtung der Rückwand und damit ein Lösen des Hintergriffs zulässt, lässt sich ohne Beeinträchtigung der Festigkeit der ursprünglich hergestellten Verbindung die erfindungsgemäße Vorrichtung wieder von dem Trägerteil lösen.

Weitere zweckmäßige Ausgestaltungen der Erfindung sind Gegenstand der Unteransprüche.

Aus der nachfolgenden Beschreibung eines bevorzugten Ausführungsbeispiels der Erfindung unter Bezug auf die Figuren der Zeichnung ergeben sich weitere zweckmäßige Ausgestaltungen und Vorteile. Es zeigen:
- Fig. 1: in einer perspektivischen Ansicht ein Ausführungsbeispiel einer mit einer Manipulationsstruktur ausgebildeten erfindungsgemäßen Vorrichtung,
- Fig. 2: im Schnitt das Ausführungsbeispiel gemäß Fig. 1 in einer Einbausituation,
- Fig. 3: im Schnitt die Anordnung des erfindungsgemäßen Ausführungsbeispieles gemäß Fig. 2 mit einem Werkzeug in Eingriff mit der Manipulationsstruktur und
- Fig. 4: im Schnitt das Ausführungsbeispiel gemäß Fig. 1 nach Entfernen aus der Anordnung gemäß Fig. 2 und Fig. 3.

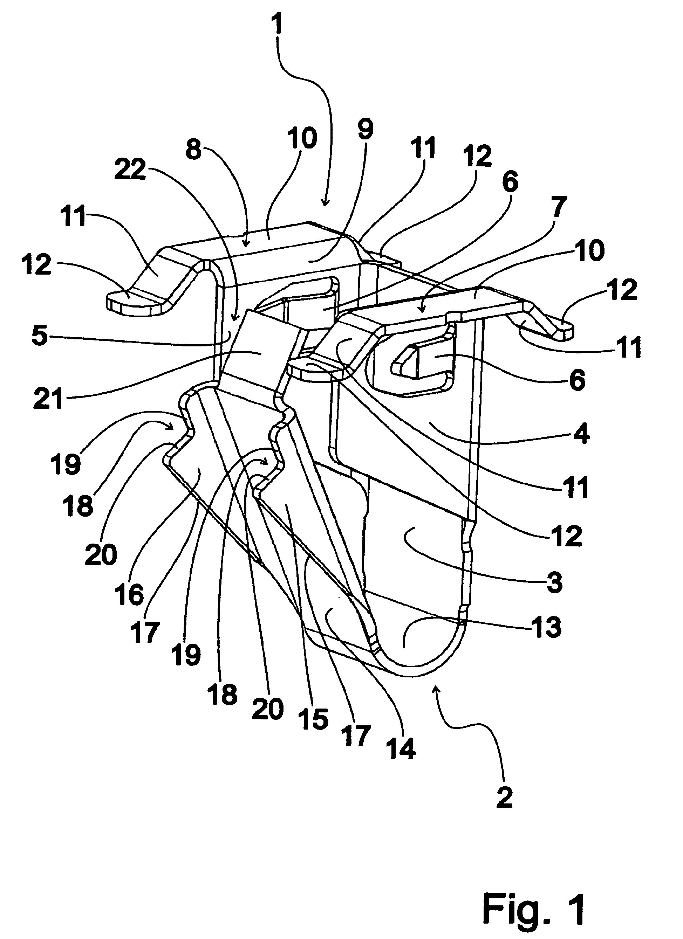

Fig. 1 zeigt in einer perspektivischen Ansicht ein durch einen Stanz-Biege-Vorgang aus einem Blechstreifen hergestelltes Ausführungsbeispiel einer erfindungsgemäßen Vorrichtung. Das Ausführungsbeispiel gemäß Fig. 1 verfügt über ein Kopfteil 1 und über ein dem Kopfteil 1 gegenüberliegend angeordnetes Fußteil 2.

Das Fußteil 2 weist eine rechteckförmige flache Rückwand 3 auf, an deren Längsseiten in deren jeweiligen dem Kopfteil 1 zugewandten Erdbereich jeweils ein Seitenflügel 4, 5 angeformt ist. Jeder Seitenflügel 4, 5 steht in etwa rechtwinklig zu der Rückwand 3 in die jeweils gleiche Richtung ab und weist in seinem dem Kopfteil 1 zugewandten Bereich eine Fixierzunge 6 auf, die sich von der Rückwand 3 wegweisend schräg nach außen ausgestellt erstreckt.

An den Seitenflügeln 4, 5 sind bündig mit der mit dem Kopfteil 1 abschließenden kurzen Randseite der Rückwand 3 Randstege 7, 8 angeformt, die jeweils über einen gebogenen, sich von den Seitenflügeln 4, 5 weg nach außen erstreckenden Anfügeabschnitt 9 mit den Seitenflügeln 4, 5 verbunden sind. Jeder Randsteg 7, 8 verfügt über einen mit dem jeweiligen Anfügeabschnitt 9 verbundenen planen Deckabschnitt 10, der sich über die Länge der Seitenflügel 4, 5 erstreckt und an dessen äußeren Enden über jeweils einen in Richtung des Fußteiles 2 geneigten Schrägabschnitt 11 ein in etwa quadratischer Auflageabschnitt 12 angeformt ist. Die Auflageabschnitte 12 liegen in einer Ebene, die zwischen den Fixierzungen 6 und den dem Kopfteil 1 zugewandten Randseiten der Seitenflügel 4, 5 angeordnet ist. Dadurch ist eine gewisse Elastizität in Längsrichtung der erfindungsgemäßen Vorrichtung erzielt.

An der dem Kopfteil 1 abgewandten kurzen Randseite der Rückwand 3 weist das Fußteil 2 einen rund umgebogenen Umbiegeabschnitt 13 auf, der sich von dieser kurzen Randseite der Rückwand 3 weg in Richtung des Kopfteiles 1 auf die Seite der Rückwand 3 erstreckt, auf der die Seitenflügel 4, 5 angeordnet sind.

An den Umbiegeabschnitt 13 ist an dem von der Rückwand 3 abgewandten Ende mit einer kurzen Randseite eine rechteckig ausgebildete Vorderwand 14 als Teil einer Vorderwandanordnung angesetzt, die sich von dem Umbiegeabschnitt 13 schräg zu der Rückwand 3 ausgerichtet und von dieser wegweisend in Richtung des Kopfteiles 1 erstreckt. An den langen Randseiten der Vorderwand 14 sind bei diesem Ausführungsbeispiel als funktionale Teile einer Manipulationsstruktur und als körperliche Teile der Vorderwandanordnung Sperrflügel 15, 16 angesetzt, die in etwa rechtwinklig zu der Vorderwand 14 ausgerichtet sind und sich von der Rückwand 3 wegweisend nach außen erstrecken.

Jeder Sperrflügel 15, 16 ist mit einer von dem Umbiegeabschnitt 13 wegweisend ansteigenden Aufgleitschräge 17 und auf der dem Kopfteil 1 zugewandten Seite mit einer Raststufe 18 ausgebildet. Jede Raststufe 18 weist eine in etwa parallel zu der Vorderwand 14 ausgerichtete sowie in einem Abstand von dieser ausgerichtete Anlageseite 19 und eine in etwa rechtwinklig zu der Vorderwand 14 ausgerichtete Hintergriffseite 20 auf, die sich an ihrem der Vorderwand 14 abgewandten Ende an die Aufgleitschräge 17 anschließt.

Weiterhin ist an die dem Umbiegeabschnitt 13 gegenüberliegenden kurzen Randseite der Vorderwand 14 als weiteres Teil der Manipulationsstruktur eine rechteckige Führungszunge 21 angesetzt, die gegenüber der Vorderwand 14 schräg gestellt ist und sich in Richtung der Rückwand 3 erstreckt. Das von der Vorderwand 14 abgewandte freie Ende der Führungszunge 21 endet in etwa in der Ebene der von dem Umbiegeabschnitt 13 abgewandten Randseiten der Rückwand 3 sowie der Seitenflügel 4, 5.

Aus Fig. 1 ist ersichtlich, dass die Teile der Manipulationsstruktur, nämlich bei dem Ausführungsbeispiel gemäß Fig. 1 die Sperrflügel 15, 16 und die Führungszunge 21, in einem Werkzeugkanal 22 liegen, der zwischen den der Vorderwand 14 benachbart angeordneten Auflageabschnitte 12 der Randstege 7, 8 angeordnet ist.

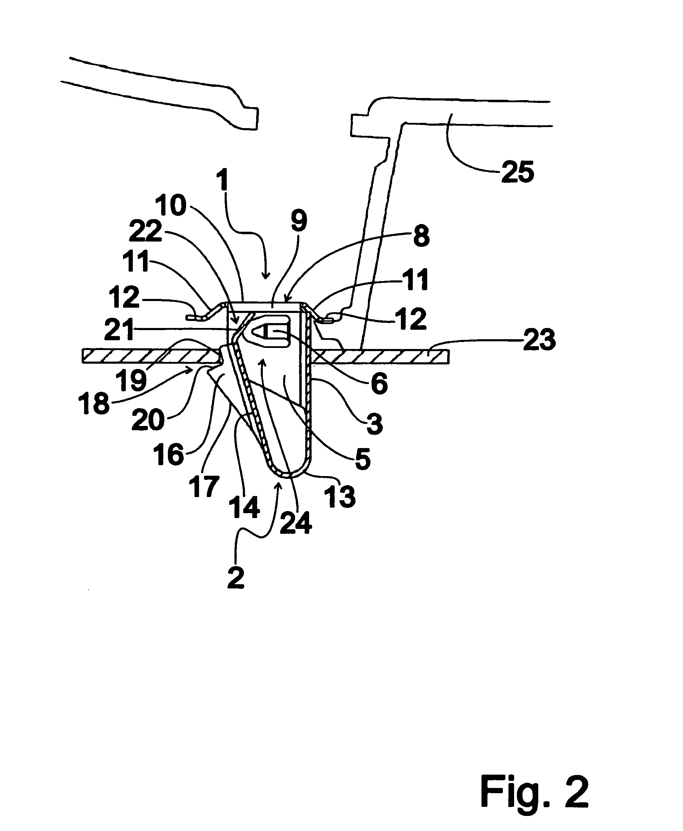

Fig. 2 zeigt das Ausführungsbeispiel gemäß Fig. 1 in einem Längsschnitt in einer bestimmungsgemäßen Anordnung, in der das Fußteil 2 in eine in einem Trägerteil 23 eingebrachte Einfügeausnehmung 24 unter Aufgleiten der Aufgleitschrägen 17 an dem Rand der Einfügeausnehmung 24 und Einfedern der Vorderwand 14 in Richtung der Rückwand 3 während des Einführvorganges eingefügt worden ist, während die Auflageabschnitte 12 an einem mit dem Trägerteil 23 zu verbindenden Anbauteil 25, hier in Gestalt eines sogenannten "retainer" beim Befestigen einer auch "Airbag" genannten Luftsackeinrichtung aufliegen und dadurch das Anbauteil 25 mit dem Trägerteil 23 verbinden.

In dieser Anordnung ist die Vorderwand 14 gegenüber der in Fig. 1 dargestellten relaxierten Anordnung in Richtung der Rückwand 3 gebogen, wobei aufgrund der durch den Umbiegeabschnitt 13 ausgeübten Rückstellkraft die Anlageseiten 19 der Sperrflügel 15, 16 an dem Rand der Einfügeausnehmung 24 anliegen, während die Hintergriffseiten 20 der Sperrflügel 15, 16 den an die Einfügeausnehmung 24 angrenzenden sowie dem Anbauteil 25 abgewandten Randbereich des Trägerteiles 23 hintergreifen und die Rückwand 3 an dem Rand der Einfügeausnehmung 24 anliegt. Dadurch ist die erfindungsgemäße Vorrichtung mit einer sehr hohen Auszugskraft in der Einfügeausnehmung 24 verankert, so dass das Anbauteil 25 sehr stabil mit dem Trägerteil 23 verbunden ist.

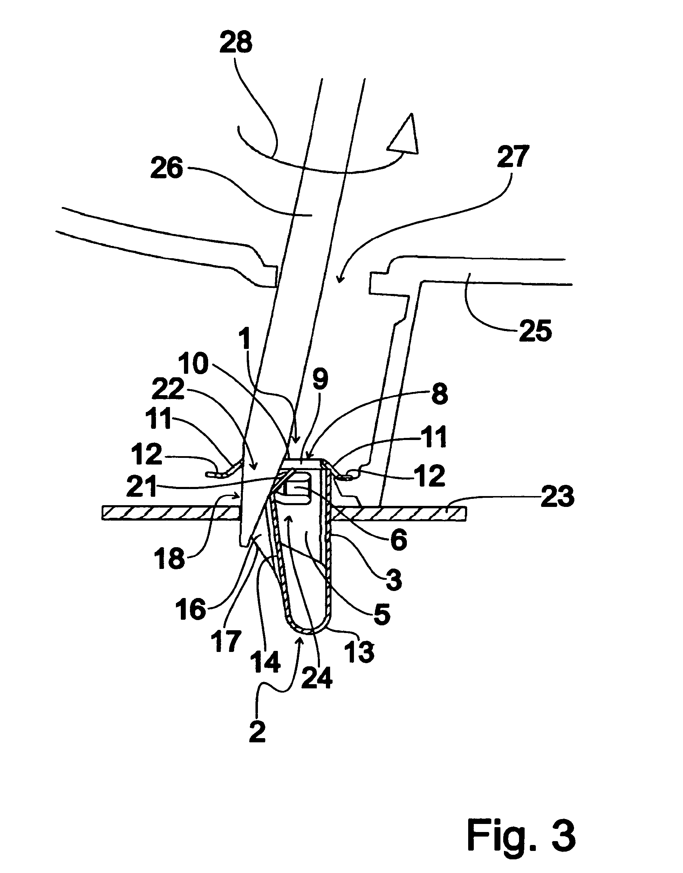

Fig. 3 zeigt in einer der Darstellung gemäß Fig. 2 entsprechenden Schnittansicht die Anordnung gemäß Fig. 2 mit einem teilweise dargestellten Schraubendreher, dessen Schraubendreherklinge 26 als Werkzeug zum Lösen der Verbindung zwischen der efindungsgemäßen Vorrichtung und dem Trägerteil 23 durch eine in dem Anbauteil 25 ausgebildete Durchsteckausnehmung 27 hindurch in den Werkzeugkanal 22 eingefügt worden ist. Dabei wird die Schraubendreherklinge 26 von der schräg gestellten Führungszunge 21 in Richtung der von der Rückwand 3 abgewandten Seite der Vorderwand 14 zwischen die Sperrflügel 15, 16 sowie zwischen die Vorderwand 14 und den Rand der Einfügeausnehmung 24 geführt. In dieser Anordnung ist die Vorderwand 14 der gegenüber der Anordnung gemäß Fig. 2 in Richtung der Rückwand 3 gebogen, wobei jedoch der Hintergriff der Hintergriffseiten 20 mit dem an die Einfügeausnehmung 24 angrenzenden Randbereich des Trägerteiles 23 unter Umständen noch nicht beseitigt ist, sondern dass hierfür die Schraubendreherklinge 26 noch in einer durch einen Pfeil gekennzeichneten Drehrichtung 28 gedreht werden muss.

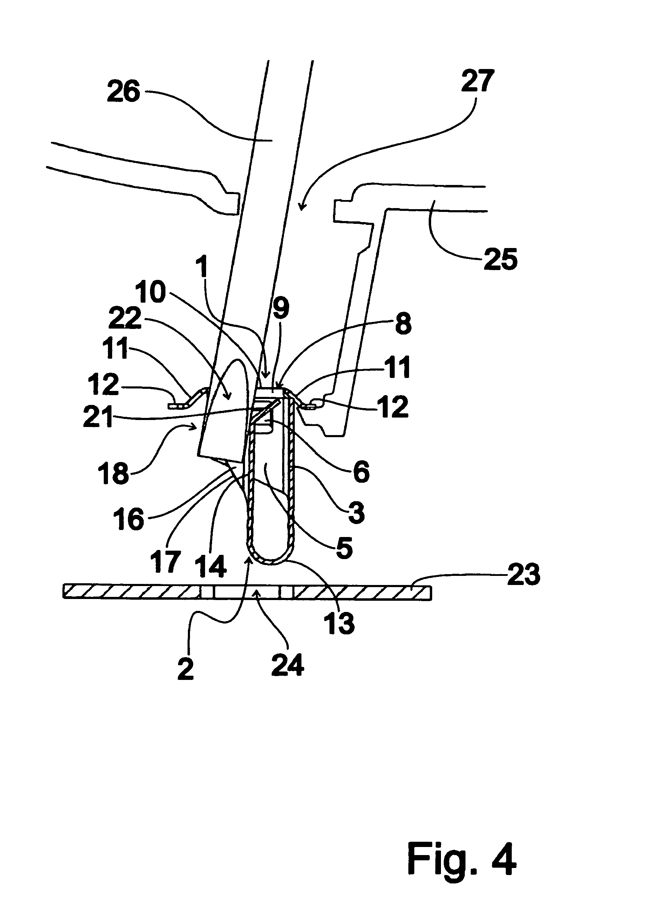

Fig. 4 zeigt in einer Darstellung gemäß Fig. 2 und Fig. 3 das Ausführungsbeispiel gemäß Fig. 1 nach Drehen der Schraubendreherklinge 26 in die Drehrichtung 28 bis in eine zu der Anordnung gemäß Fig. 3 in etwa rechtwinkligen Ausrichtung, in der aufgrund der Breite der Schraubendreherklinge 26 im Bereich des Werkzeugkanales 22 die Vorderwand 14 gegenüber der Anordnung gemäß Fig. 3 noch weiter in Richtung der Rückwand 3 versetzt ist sowie der Hintergriff der Hintergriffseiten 20 mit dem an die Einfügeausnehmung 24 angrenzenden Randbereich des Trägerteiles 23 vollständig gelöst ist. In dieser Anordnung lässt sich die erfindungsgemäße Vorrichtung nunmehr behinderungsfrei wieder aus der Einfügeausnehmung 24 entnehmen und somit das Anbauteil 25 von dem Trägerteil 23 entfernen. Dabei sichern die Fixierzungen 6 die erfindungsgemäße Vorrichtung gegen unbeabsichtigtes Abfallen von dem Anbauteil 25.

## Patentansprüche

1. Vorrichtung zum Befestigen eines Anbauteiles (25) an einem Trägerteil (23) mit einem zur Auflage an dem Anbauteil (25) oder an dem Trägerteil (23) bestimmten Kopfteil (1), das über seitliche überstehende Auflageabschnitte (12) verfügt, und mit einem zum Einfügen in eine in dem Trägerteil (23) ausgebildete Einfügeausnehmung (24) bestimmten Fußteil (2), das eine Rückwand (3) aufweist, die bei in die Einfügeausnehmung (24) eingefügter Anordnung des Fußteiles (2) dem Rand der Einfügeausnehmung (24) gegenüberliegend angeordnet ist, und das mit einer über einen Umbiegeabschnitt (13) mit der Rückwand (3) verbundenen, gegenüber der Rückwand (3) federnden Vorderwandanordnung (14) ausgebildet ist, die sich von der Rückwand (3) wegweisend in Richtung des Kopfteiles (1) erstreckt und mit ihrem dem Kopfteil (1) zugewandten freien Ende in einer in die Einfügeausnehmung (24) eingefügten Anordnung des Fußteiles (2) einen dem Kopfteil (1) abgewandten, um die Einfügeausnehmung (24) liegenden Randbereich des Trägerteiles (23) hintergreift, wobei das Kopfteil (1) in Verlängerung der Vorderwandanordnung (14) einen Werkzeugkanal (22) aufweist, wobei an der Vorderwandanordnung (14) eine Manipulationsstruktur (15, 16, 21) ausgebildet ist, die mit einem durch den Werkzeugkanal (22) durchgeführten Werkzeug (26) zum Bewegen der Vorderwandanordnung (14) in Richtung der Rückwand (3) für ein Lösen des Hintergriffes der Vorderwandanordnung (14) mit dem an die Einfügeausnehmung (24) angrenzenden Randbereich des Trägerteiles (23) in Eingriff kommt, **dadurch gekennzeichnet, dass** die Manipulationsstruktur eine Führungszunge (21), die an dem freien Ende einer Vorderwand (14) der Vorderwandanordnung angesetzt ist, und zwei seitlich der Vorderwand (14) angeformte, sich von der Rückwand (3) wegweisend nach außen erstreckende Sperrflügel (15, 16) aufweist, und dass jeder Sperrflügel (15, 16) eine Raststufe (18) mit einer parallel zu der Vorderwand (14) sowie in einem Abstand von dieser ausgerichteten Anlageseite (19) und mit einer Hintergriffseite (20) aufweist, wobei bei in die Einfügeausnehmung (24) eingefügter Anordnung des Fußteiles (2) die Anlageseiten (19) an dem Rand der Einfügeausnehmung (24) und die Hintergriffseiten (20) an dem dem Kopfteil (1) abgewandten Randbereich des Trägerteiles (23) anliegen.

2. Vorrichtung nach Anspruch 1, **dadurch gekennzeichnet, dass** das Kopfteil (1) zwei seitlich nach außen überstehende längliche Randstege (7, 8) aufweist.

3. Vorrichtung nach Anspruch 2, **dadurch gekennzeichnet, dass** an jedem Ende eines Randsteges (7, 8) ein in Richtung des Fußteiles (2) abgewinkelter Schrägabschnitt (11) angesetzt ist, an dem endseitig ein Auflageabschnitt (12) angeformt ist.

4. Vorrichtung nach Anspruch 2 oder Anspruch 3, **dadurch gekennzeichnet, dass** jeder Randsteg (7, 8) an einem Seitenflügel (4, 5) angesetzt ist, der an einer Randseite der Rückwand (3) angeformt ist.

5. Vorrichtung nach einem der Ansprüche 1 bis 4, **dadurch gekennzeichnet, dass** sich die Führungszunge (21) abgewinkelt in Richtung der Rückwand (3) bis in den Bereich des Kopfteiles (1) erstreckt.

6. Vorrichtung nach Anspruch 4 oder Anspruch 5, **dadurch gekennzeichnet, dass** jeder Seitenflügel (4, 5) eine seitlich nach außen überstehende Fixierzunge (6) aufweist.

## Claims

1. Device for fastening an added part (25) to a supporting part (23), having a head portion (1), intended to be supported on the added part (25) or on the supporting part (23), which has sections to be supported (12) which project laterally, and having a foot portion (2) intended for insertion in an opening for insertion (24) formed in the supporting part (23), which foot portion (2) has a rear wall (3) which, when the foot portion (2) is in a position where it is inserted in the opening for insertion (24), is arranged opposite the edge of the opening for insertion (24), and which foot portion (2) is formed to have a front wall arrangement (14) which is connected to the rear wall (3) by a bent-round section (13), which is resilient relative to the rear wall (3), which extends towards the head portion (1) while pointing away from the rear wall (3) and which, when the foot portion (2) is in a position where it is inserted in the opening for insertion (24), engages behind, by its free end adjacent the head portion (1), an edge region of the supporting part (23) which faces away from the head portion (1) and which is situated around the opening for insertion (24), the head portion (1) having a channel (22) for a tool which forms a continuation of the front wall arrangement (14), there being formed on the front wall arrangement (14) a structure for manipulation (15, 16, 21) which comes into engagement with a tool (26) passed through the channel (22) for a tool to allow the front wall arrangement (14) to be moved towards the rear wall (3) in order to release the engagement of the front wall arrangement (14) behind the edge region of the supporting part (23) which borders on the opening for insertion (24), **characterised in that** the structure for manipulation has a guiding tongue (21) which is connected to the free end of a front wall (14) of the front wall arrangement and two locking wings (15, 16) integrally formed at the sides of the front wall (14) which extends outwards while pointing away from the rear wall (3), and **in that** each locking wing (15, 16) has a latching step (18) having a face for abutment (19) aligned parallel to the front wall (14) at a distance therefrom and having a face (20) for engagement behind a surface, the faces for abutment (19) resting against the edge of the opening for insertion (24), and the faces (20) for engagement behind a surface resting against the edge region of the supporting part (23) which faces away from the head portion (1), when the foot portion (2) is in a position where it is inserted in the opening for insertion (24).

2. Device according to claim 1, **characterised in that** the head portion (1) has two elongated edge ribs (7, 8) which project outwards laterally.

3. Device according to claim 2, **characterised in that** there is connected to each end of an edge rib (7, 8) an oblique section (11) which is angled down towards the foot portion (2) and at the end of which is integrally formed a section to be supported (12).

4. Device according to claim 2 or claim 3, **characterised in that** each edge rib (7, 8) is connected to a lateral wing (4, 5) which is integrally formed on one edge of the rear wall (3).

5. Device according to one of claims 1 to 4, **characterised in that** the guiding tongue (21) extends into the region of the head portion (1), at an angle towards the rear wall (3).

6. Device according to claim 4 or claim 5, **characterised in that** each lateral wing (4, 5) has a securing tongue (6) which projects outwards laterally.

## Revendications

1. Dispositif pour la fixation d'un élément rapporté (25) sur un élément faisant office de support (23), se composant d'une partie formant tête (1) destinée à être appliquée en appui sur l'élément rapporté (25) ou l'élément faisant office de support (23), qui est munie de segments d'appui (12) faisant saillie dans le plan latéral, et d'un pied d'ancrage (2) destiné à être emmanché dans un évidement d'insertion (24) ménagé dans l'élément faisant office de support (23), qui comporte une paroi arrière (3) qui, lorsque le pied d'ancrage (2) est emmanché dans l'évidement d'insertion (24), se trouve disposée à l'opposé du bord de l'évidement d'insertion (24) et qui est munie d'un agencement formant paroi antérieure (14) susceptible de réagir par effet élastique vis-à-vis de la paroi arrière (3), raccordé par l'intermédiaire d'une portion cintrée (13) à la paroi arrière (3), qui s'étend depuis la paroi arrière (3) orienté vers l'extérieur dans la direction de la partie formant tête (1) et dont l'extrémité libre orientée vers la partie formant tête (1) vient, lorsque le pied d'ancrage (2) se trouve dans sa position d'emmanchement dans l'évidement d'insertion (24), cramponner par derrière une portion de rive de l'élément faisant office de support (23), disposée à l'opposé de la partie formant tête (1), autour de l'évidement d'insertion (24), la partie formant tête (1) comportant en l'occurrence, dans le prolongement de l'agencement formant paroi antérieure (14), une voie de passage pour l'insertion d'un outil (22), l'agencement formant paroi antérieure (14) étant en l'occurrence muni d'une structure de manipulation (15, 16, 21) qui vient en prise d'engagement avec un outil (26) introduit dans le passage pour l'insertion d'un outil (22) pour provoquer le déplacement de l'agencement formant paroi antérieure (14) dans la direction de la paroi arrière (3) pour désolidariser l'agencement formant paroi antérieure (14) de son emprise de cramponnement par derrière avec la portion de rive de l'élément faisant office de support (23) contigüe à l'évidement d'insertion (24), **caractérisé en ce que** la structure de manipulation comporte une languette de guidage (21), qui est disposée attenante à l'extrémité libre de la paroi antérieure (14) de l'agencement formant paroi antérieure et deux ailettes de blocage (15, 16) réalisées dans le plan latéral solidaires par formage de la paroi antérieure (14) et qui s'étendent vers l'extérieur en s'écartant de la paroi arrière (3) et **en ce que** chaque ailette de blocage (15, 16) est munie d'un gradin d'accrochage (18) se composant d'une face d'assise (19) s'étendant suivant une orientation parallèle à la paroi antérieure (14) ainsi qu'à une certaine distance de celle-ci et d'une face de cramponnement par derrière (20), les faces d'assise (19) se trouvant en l'occurrence en contact d'application contre le bord de l'évidement d'insertion (24) et les faces de cramponnement par derrière (20) contre la portion de rive de l'élément faisant office de support (23) se trouvant à l'opposé de la partie formant tête (1).

2. Dispositif selon la revendication 1, **caractérisé en ce que** la partie formant tête (1) comporte deux segments de rive de forme allongée (7, 8) faisant saillie vers l'extérieur dans le plan latéral.

3. Dispositif selon la revendication 2, **caractérisé en ce qu'**il est prévu, attenante à chaque extrémité des segments de rive (7, 8), une portion à disposition oblique (11) repliée suivant une disposition angulaire dans la direction du pied d'ancrage (2), à l'extrémité de laquelle une portion d'assise (12) est réalisée solidaire de celle-ci par moulage.

4. Dispositif selon la revendication 2 ou la revendication 3, **caractérisé en ce que** chaque segment de rive (7, 8) est réalisé attenant à une ailette latérale (4, 5) qui est réalisée solidaire par moulage d'une portion de rive de la paroi arrière (3).

5. Dispositif selon l'une des revendications 1 à 4, **caractérisé en ce que** la languette de guidage (21) s'étend, suivant une disposition angulaire, dans la direction de la paroi arrière (3) jusque dans la zone correspondant à la partie formant tête (1).

6. Dispositif selon la revendication 4 ou la revendication 5, **caractérisé en ce que** chaque ailette latérale (4, 5) est munie d'une languette d'immobilisation en position (6) faisant saillie vers l'extérieur.
